# EUROPÄISCHE PATENTSCHRIFT

(11) **EP 0 850 371 B1**
(45) Veröffentlichungstag und Bekanntmachung des Hinweises auf die Patenterteilung: **03.05.2000**
(21) Anmeldenummer: 96931779.1
(22) Anmeldetag: 07.09.1996
(51) Int. Cl.: F16H 61/00

(54) **EINRICHTUNG ZUR ABDICHTUNG EINES HYDRAULIKSTEUERGERÄTES**
ARRANGEMENT FOR SEALING A HYDRAULIC CONTROL DEVICE
DISPOSITIF POUR RENDRE ETANCHE UN APPAREIL DE COMMANDE HYDRAULIQUE

(30) Priorität: 14.09.1995 DE 19533977
(43) Veröffentlichungstag der Anmeldung: 01.07.1998
(73) Patentinhaber: ZF FRIEDRICHSHAFEN Aktiengesellschaft, 88038 Friedrichshafen (DE)
(72) Erfinder: HOLDENRIED, Willy, D-88090 Immenstaad (DE)
(86) Internationale Anmeldenummer: EP9603928
(87) Internationale Veröffentlichungsnummer: WO9710454

(56) Entgegenhaltungen:
- DE-A- 4 134 369
- FR-A- 2 228 989
- FR-A- 2 582 061

## Beschreibung

Die Erfindung betrifft eine Einrichtung zur Abdichtung eines Hydrauliksteuergerätes, welches auf der Unterseite eines Automatgetriebes montiert ist. Im Hydrauliksteuergerät befinden sich die elektromagnetischen Stellglieder und hydraulischen Ventile.

Unter dem gattungsgemäßen Begriff Automatgetriebe sind sowohl gestufte als auch stufenlose Automatgetriebe zu verstehen. Elektrohydraulische Automatgetriebe setzen sich aus folgenden Baugruppen zusammen: Anfahreinheit, z. B. hydrodynamischer Wandler, Kupplung/Bremsen, Hydrauliksteuergerät und ein elektronisches Getriebesteuergerät. Das elektronische Getriebesteuergerät bildet aus Eingangsgrößen die für die Steuerung des Automatgetriebes erforderlichen Parameter. Eingangsgrößen sind von Sensoren bereitgestellte Signale und von anderen elektronischen Steuergeräten, z. B. Motorsteuergerät, zur Verfügung gestellte Signale. Das elektronische Getriebesteuergerät steuert über Ausgangssignale die elektromagnetischen Stellglieder, welche sich im Hydrauliksteuergerät befinden. Über die elektromagnetischen Stellglieder werden Schaltungen initiiert, indem eine entsprechende Kupplungs-/Brems-Kombination ausgewählt wird. Zusätzlich wird über die elektromagnetischen Stellglieder der Druckverlauf während der Schaltung und das Druckniveau außerhalb der Schaltung gesteuert.

Aus dem Stand der Technik, z. B. DE-OS 40 41 253, sind Automatgetriebe bekannt, bei denen das Hydrauliksteuergerät auf der Unterseite montiert ist. Das Hydrauliksteuergerät besteht aus einem Ansaugschnorchel, einem Ventilgehäuse, einem Zwischenblech mit Dichtung und einer Kanalplatte. Hierbei kommen die Kanalplatte und das Getriebegehäuse über zwei Flächen zueinander in Anlage. Diese beiden Flächen sind als Dichtflächen ausgeführt. Aufgrund des Setzverhaltens, Änderung der Vorspannkraft, der Verbindungsschrauben kann es an dieser Stelle zu einer Undichtigkeit kommen. Da das Hydrauliksteuergerät nur teilweise vom Schmiermittelsumpf benetzt wird, führt eine Undichtigkeit dazu, daß die Pumpe über den Ansaugkanal statt des Hydraulikfluids aus dem Schmiermittelsumpf Luft aus dem Getriebeinneren ansaugt.

Die Erfindung hat somit zur Aufgabe, für ein Hydrauliksteuergerät eine sichere Ansaugung zu gewährleisten.

Die Aufgabe wird erfindungsgemäß dadurch gelöst, daß die Kanalplatte wenigstens einen Saugkanal, einen Hauptdruckkanal, Meß- und Verteilungskanäle aufweist, wobei der Saugkanal zumindest teilweise von einem Verteilungskanal umgeben ist. Der Verteilungskanal führt ein höheres Druckniveau als der Saugkanal. Der Verteilungskanal befindet sich zwischen dem Saugkanal und der Außenseite der Kanalplatte. Durch diese erfindungsgemäße Lösung wird der Vorteil erzielt, daß eine Undichtigkeit an der Stelle Kanalplatte/Getriebegehäuse nicht zum Ansaugen von Luft führt. Da der Saugkanal von einem Verteilungskanal mit einem höheren Druckniveau umgeben ist, bewirkt eine Undichtigkeit, daß der Saugkanal von diesem Verteilungskanal das Hydraulikfluid ansaugt.

In einer weiteren Ausgestaltung wird vorgeschlagen, daß der Hauptdruckkanal zumindest teilweise von drucklosen Hilfskanälen umgeben ist, wobei diese zwischen dem Hauptdruckkanal und einem Meßkanal angeordnet sind. Durch diese Ausgestaltung wird der Vorteil erzielt, daß eine Verfälschung des Druckniveaus innerhalb des Meßkanals bei Undichtigkeit wirkungsvoll verhindert wird. Bei einer Undichtigkeit gelangt das Hydraulikfluid vom Hauptdruckkanal zu den drucklosen Hilfskanälen. Das Hydraulikfluid kann somit die Meßkanäle nicht erreichen.

In den Zeichnungen ist ein Ausführungsbeispiel dargestellt.
Es zeigen:
- Fig. 1: Anordnung und Aufbau eines Hydrauliksteuergerätes und
- Fig. 2: Kanalplatte.

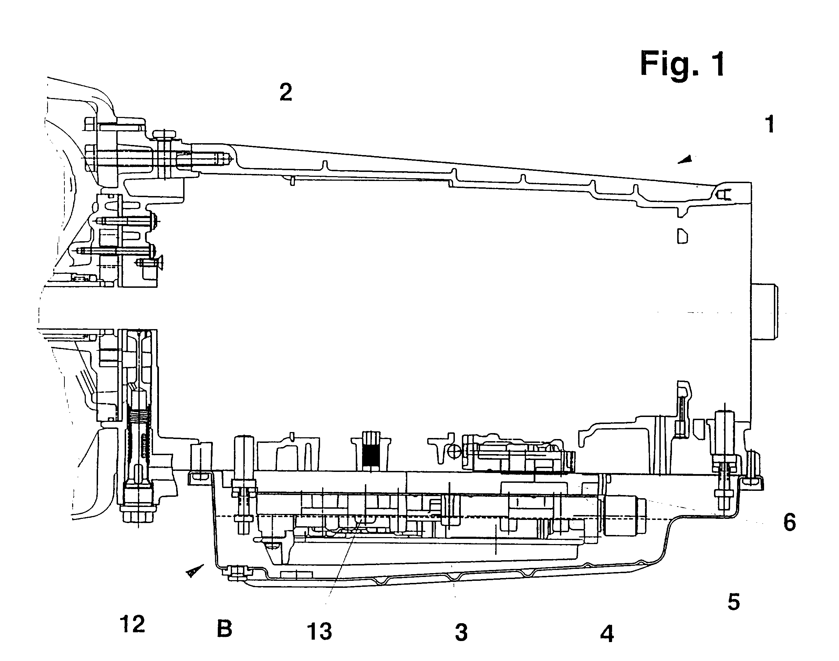

Fig. 1 zeigt die Anordnung und den Aufbau eines Hydrauliksteuergerätes 12. Dieses ist ein Bestandteil des Automatgetriebes 1 und befindet sich innerhalb des Gehäuses 2. Das Hydrauliksteuergerät 12 ist am Getriebegehäuse 2 mittels Schrauben 13 befestigt, Dichtfläche A. Das Hydrauliksteuergerät 12 setzt sich zusammen aus einem Schnorchel mit Sieb 3, einem Ventilgehäuse 4, einem Zwischenblech mit Dichtung 5 und der Kanalplatte 6. Das Hydrauliksteuergerät 12 ist teilweise vom Schmiermittelsumpf benetzt. Bekanntermaßen wird das Niveau des Schmiermittelsumpfes so eingestellt, daß der Schnorchel und das Sieb 3 in allen Fahrsituationen mit Schmiermittel bedeckt sind. In Fig. 1 ist dieses Schmiermittelniveau mit Bezugszeichen B dargestellt. Das Schmiermittelniveau B erreicht somit nicht die Dichtfläche A. Eine im Automatgetriebe angeordnete Pumpe, diese ist in Fig. 1 nicht bezeichnet, saugt mittels des Schnorchels 3 durch das Hydrauliksteuergerät hindurch das Schmiermittel aus dem Schmiermittelsumpf an. Zwischen dem Ventilgehäuse 4 und der Kanalplatte 6 befindet sich das Zwischenblech mit Dichtung 5. Die Abdichtung Kanalplatte 6 zum Getriebegehäuse 2, Dichtfläche A, erfolgt rein metallisch. Zwischen der Kanalplatte 6 und dem Gehäuse 2 kann keine weitere Dichtung angeordnet werden, aufgrund des Setzverhaltens der Schrauben 13.

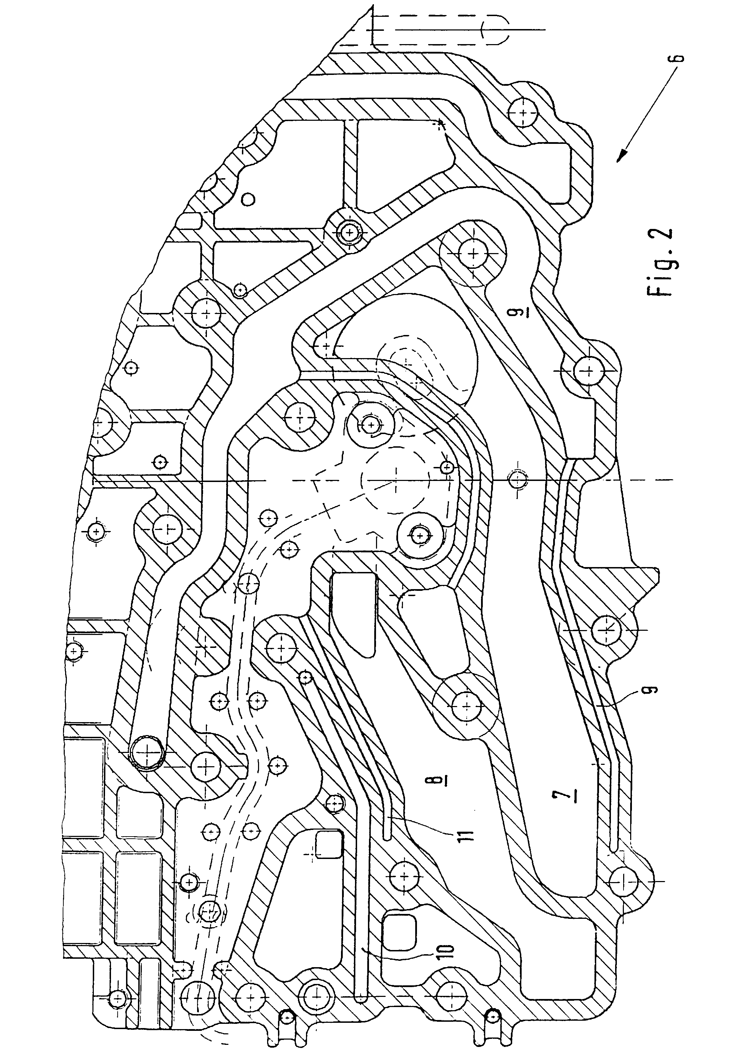

Fig. 2 zeigt die Kanalplatte 6 in Draufsicht. Die Dichtfläche A ist schraffiert dargestellt. Bezugszeichen 7 zeigt den Ansaugkanal, durch welchen die Pumpe das Schmiermittel aus dem Schmiermittelsumpf über den Schnorchel ansaugt. Im Ansaugkanal 7 herrscht somit Unterdruck. Aufgrund des Setzverhaltens der Schrauben 13 kommt es zu einer Undichtigkeit. Gemäß dem Stand der Technik würde in diesem Fall der Saugkanal 7 aus dem Inneren des Getriebegehäuses 2 Luft ansaugen. Die erfindungsgemäße Lösung besteht nun darin, daß der Saugkanal 7 in Richtung der Außenseite der Kanalplatte vom Verteilungskanal 9 umgeben ist. Der Verteilungskanal 9 führt ein höheres Druckniveau als der Saugkanal 7, z. B. 2 bar. Bei einer Undichtigkeit saugt somit der Saugkanal 7 das Hydraulikfluid aus dem Verteilungskanal 9 an.
In Fig. 2 ebenfalls dargestellt ist eine weitere Ausgestaltung. Bezugszeichen 8 zeigt den Hauptdruckkanal, der z. B. ein Druckniveau von 16 bar führt. Bezugszeichen 10 zeigt einen Meßkanal, der z. B. dazu dient, das Druckniveau in der Wandlerkupplung zu messen. Gemäß dem Stand der Technik würde ein Undichtigkeit dazu führen, daß das Hydraulikfluid vom Hauptdruckkanal in Richtung des Meßkanals 10 wandert und somit das Meßergebnis verfälscht. Die erfindungsgemäße Lösung besteht nun darin, daß zwischen dem Hauptdruckkanal 8 und dem Meßkanal 10 ein Hilfskanal 11 angeordnet ist. Der Hilfskanal 11 ist drucklos. Eine Undichtigkeit führt somit dazu, daß das Hydraulikfluid vom Hauptdruckkanal zum Hilfskanal 11 wandert und somit den Meßkanal 10 nicht erreichen kann.

Die erfindungsgemäße Lösung läßt sich in folgenden Fällen anwenden:
- Ansaugkanal-Dichtstellen mit Unterdruck, die entweder dauernd oder bei bestimmten Fahrzuständen nicht im Schmiermittelsumpf liegen;
- kritische Druckkanäle, bei denen nebeneinander verlaufende Kanäle hohe Druckunterschiede aufweisen, z. B. Hauptdruckkanal mit 16 bar und Meßkanal mit 5 bar.

Typische Anwendungsbereiche wären somit die Hydrauliksteuergeräte von gestuften und stufenlosen Automatgetrieben.

### Bezugszeichen

- 1: Automatgetriebe
- 2: Getriebegehäuse
- 3: Schnorchel mit Sieb
- 4: Ventilgehäuse
- 5: Zwischenblech mit Dichtung
- 6: Kanalplatte
- 7: Saugkanal
- 8: Hauptdruckkanal
- 9: Verteilungskanal
- 10: Meßkanal
- 11: Hilfskanal
- 12: Hydrauliksteuergerät
- 13: Schrauben

- A: Dichtfläche
- B: Schmiermittelniveau

## Patentansprüche

1. Einrichtung zur Abdichtung eines Hydrauliksteuergerätes (12), welches auf der Unterseite eines Automatgetriebes (1) montiert ist, so daß das Hydrauliksteuergerät (12) nur teilweise vom Schmiermittelsumpf benetzt ist, das Hydrauliksteuergerät (12), bestehend aus einem Ansaugschnorchel (3), damit verbunden einem Ventilgehäuse (4), einem Zwischenblech mit Dichtung (5) und einer Kanalplatte (6), das Hydrauliksteuergerät (12) ist mit dem Getriebgehäuse (2) verschraubt, wobei die Kanalplatte (6) und das Getriebegehäuse (2) über zwei Dichtflächen zueinander in Anlage kommen, eine Pumpe saugt das Hydraulikmedium aus dem Schmiermittelsumpf durch das Hydrauliksteuergerät (12) hindurch an bzw. fördert das Hydraulikfluid mit hohem Druckniveau zum Ventilgehäuse (4), wobei im Ventilgehäuse (4) sich elektromagnetische Stellglieder und hydraulische Ventile befinden, über die die Kupplungen/Bremsen des Automatgetriebes gesteuert werden, dadurch **gekennzeichnet,** daß die Kanalplatte (6) wenigstens einen Saugkanal (7), einen Hauptdruckkanal (8), Verteilungsund Meßkanäle (9, 10) aufweist, wobei der Saugkanal (7) zumindest teilweise von einem Verteilungskanal (9) umgeben ist, der Verteilungskanal (9) ein höheres Druckniveau als der Saugkanal (7) führt und der Verteilungskanal (9) sich zwischen dem Saugkanal (7) und der Außenseite der Kanalplatte (6) befindet.

2. Einrichtung nach Anspruch 1, dadurch **gekennzeichnet,** daß der Hauptdruckkanal (8) zumindest teilweise von drucklosen Hilfskanälen (11) umgeben ist, wobei diese zwischen dem Hauptdruckkanal (8) und einem Meßkanal (10) angeordnet sind.

## Claims

1. Arrangement for sealing a hydraulic control device (12), which is mounted on the underside of an automatic transmission (1), so that the hydraulic control device (12) is only partly wetted by the lubricant sump, the hydraulic control device (12), consisting of an intake snorkel (3), connected thereto a valve chamber (4), an intermediate plate with seal (5) and a duct plate (6), is screwed to the transmission casing (2), wherein the duct plate (6) and the transmission casing (2) come to lie against one another via two sealing faces, a pump sucks the hydraulic medium out of the lubricant sump through the hydraulic control device (12) and delivers the hydraulic fluid at a high pressure level to the valve chamber (4), wherein the valve chamber (4) contains electromagnetic actuators and hydraulic valves via which the clutches/brakes of the automatic transmission are controlled, characterised in that the duct plate (6) comprises at least one intake duct (7), a main pressure duct (8), distributing and measuring ducts (9, 10), wherein the intake duct (7) is at least partly surrounded by a distributing duct (9), the pressure in the distributing duct (9) is at a higher level than that in the intake duct (7), and the distributing duct (9) is located between the intake duct (7) and the outside of the duct plate (6).

2. Arrangement according to Claim 1, characterised in that the main pressure duct (8) is at least partly surrounded by pressureless auxiliary ducts (11), wherein these are disposed between the main pressure duct (8) and a measuring duct (10).

## Revendications

1. Dispositif pour rendre étanche un appareil de commande hydraulique (12) qui est monté sur la face inférieure d'une boîte de vitesses automatique (1), de telle manière que l'appareil hydraulique (12) ne soit alimenté que partiellement par le réservoir contenant des matières lubrifiantes, cet appareil hydraulique (12) étant composé d'un snorkel d'aspiration (3) couplé à une boîte de soupapes (4), une plaque intermédiaire avec un joint d'étanchéité (5) et une plaque de conduits (6), l'appareil de commande hydraulique (12) étant boulonné contre la boîte de vitesses automatique (2), dans lequel la plaque de conduits (6) et le boîtier (2) de la boîte de vitesses sont appliqués l'un contre l'autre par l'intermédiaire de deux surfaces d'étanchéité, une pompe aspire le fluide hydraulique du réservoir de matière lubrifiante à travers l'appareil de commande hydraulique (12) et alimente la boîte de soupapes (4) en fluide hydraulique sous haute pression, la boîte de soupapes (4) contenant des organes d'ajustage électromagnétiques et des soupapes hydrauliques à l'aide desquelles sont commandés les embrayages et les freins de la boîte de vitesses automatique, **caractérisé en ce que** la plaque de conduits (6) comporte au moins un canal d'aspiration (7), un canal principal de pression (8), des canaux de distribution et des canaux de mesure (9, 10), le canal d'aspiration (7) étant au moins partiellement entouré d'un canal de distribution (9), le canal de distribution (9) ayant un niveau de pression plus élevé que celui du canal d'aspiration (7) et le canal de distribution (9) se trouvant entre le canal d'aspiration (7) et la face extérieure de la plaque de conduits (6).

2. Dispositif selon la revendication 1, **caractérisé en ce que** le canal principal de pression (8) est au moins partiellement entouré de conduits annexes (11) sans pression, ces derniers étant disposés entre le canal principal de pression (8) et un canal de mesure (10).
